Europäisches Patentamt

European Patent Office

Office européen des brevets

(19)

(11) Numéro de publication: **0 298 811**
**A1**

## (12) DEMANDE DE BREVET EUROPEEN

(21) Numéro de dépôt: **88401547.0**

(22) Date de dépôt: **21.06.88**

(51) Int. Cl.⁴: **H 01 G 4/36**
**H 01 G 4/20**

(30) Priorité: **30.06.87 FR 8709238**

(43) Date de publication de la demande:
**11.01.89 Bulletin 89/02**

(84) Etats contractants désignés:
**BE DE GB IT LU NL**

(71) Demandeur: **THOMSON-CSF**
**173, Boulevard Haussmann**
**F-75379 Paris Cédex 08 (FR)**

(72) Inventeur: **Bureau, Jean-Marc**
**THOMSON-CSF SCPI 19, avenue de Messine**
**F-75008 Paris (FR)**

**Champagne, Monique**
**THOMSON-CSF SCPI 19, avenue de Messine**
**F-75008 Paris (FR)**

(74) Mandataire: **Guérin, Michel et al**
**THOMSON-CSF SCPI 19, avenue de Messine**
**F-75008 Paris (FR)**

(54) **Condensateur multicouche à base de polymère ferroélectrique.**

(57) Selon l'invention, le condensateur multicouche est formé par la mise en parallèle ou par une association série-parallèle de condensateurs élémentaires formés à partir de films de polymères (11 à 14) dont les températures de Curie sont différentes.

FIG.3

**Description**

## CONDENSATEUR MULTICOUCHE A BASE DE POLYMERE FERROELECTRIQUE

La présente invention concerne des condensateurs du type multicouche à base de films de polymère et possédant une capacité volumique élevée.

Il est connu de réaliser des condensateurs à base de films diélectriques polymères minces métallisés et empilés. Ces polymères sont par exemple le polyester ou le polycarbonate. Ils ont une permittivité de l'ordre de 3.

Pour miniaturiser un condensateur et augmenter sa capacité volumique, on peut d'une part diminuer l'épaisseur du film diélectrique par biétirage ou comme le mentionne le brevet FR 2 548 440 par dépôt de ce film par enduction d'une solution du polymère (procédé laque), ou d'autre part, chercher à utiliser des diélectriques de plus haute permittivité. Le polyfluorure de vinylidène (PVDF), avec une permittivité de l'ordre de 10, est déjà utilisé dans la fabrication de tels condensateurs.

Le PVDF(ou PVF$_2$) présente l'inconvénient d'être difficile à obtenir sous forme de film mince. Ses propriétés mécaniques limitent sa mise en oeuvre par biétirage et il ne peut pas être déposé par laquage car il est très peu soluble dans les solvants classiques.

En revanche certains copolymères de fluorure de vinylidène avec par exemple le trifluoroéthylène p(VF$_2$ - C$_2$ F$_3$ H) ou le tétrafluoroéthylène p(VF$_2$ - C$_2$ F$_4$) ou encore des terpolymères de fluorure de vinylidène avec par exemple le trifluoroéthylène et le hexafluoropropylène p(VF$_2$ - C$_2$ F$_3$ H -C$_3$ F$_6$) ou le trifluoroéthylène et le trifluorochloroéthylène P(VF$_2$ - C$_2$ F$_3$ H - C$_2$ F$_3$Cl) apportent des avantages par rapport à l'homopolymère. Tout en gardant des permittivités au moins égales à celle du PVDF, ces dérivés sont solubles dans des solvants classiques, ce qui permet leur mise en oeuvre par laquage ou par coulée. Certains d'entre eux ont des propriétés mécaniques améliorées et peuvent être biétirés plus facilement. De plus, certains de ces copolymères et terpolymères ont un caractère ferroélectrique et, en particulier, présentent autour de la température de transition (température de Curie), un maximum de la permittivité qui peut atteindre des valeurs allant de 40 à 70. Ces copolymères et terpolymères présentent cependant une variation très importante de la permittivité en fonction de la température et ne peuvent donc être utilisés en tant que tels dans des condensateurs à capacité stable.

Par analogie avec les alliages minéraux ferroélectriques, des essais de mélanges de ces différents polymères ayant des températures de Curie distinctes ont été réalisés pour tenter d'en moyenner le comportement diélectrique. L'expérience montre que ces alliages n'ont pas les propriétés moyennes prévues par les théories de mélanges et que leurs propriétés sont peu stables au cours des cyclages thermiques, certainement du fait du réarrangement des différents polymères. Il se passe des phénomènes de cocristallisation et au bout d'un certain temps la permittivité présente, en fonction de la température, une courbe à maximum analogue à celle des copolymères.

Afin de pallier ces inconvénients et pour obtenir des valeurs de permittivité élevées et stables pour une gamme de température la plus large possible, l'invention propose des condensateurs utilisant des combinaisons de films minces de plusieurs polymères ferroélectriques présentant des températures de Curie distinctes afin d'en moyenner la variation de la permittivité.

L'invention a donc pour objet un condensateur multicouche à base de films en polymère ferroélectrique, formé à partir d'au moins deux films de polymères dont les températures de Curie sont différentes.

L'invention sera mieux comprise et d'autres avantages apparaîtront à la lecture de la description qui va suivre et grâce aux dessins annexés parmi lesquels :
- la figure 1 est un diagramme représentant la permittivité de copolymères à base de fluorure de vinylidène en fonction de la température,
- la figure 2 est un diagramme représentant la permittivité de terpolymères à base de fluorure de vinylidène en fonction de la température,
- les figures 3, 5 et 7 représentent différentes versions de condensateurs empilés,
- les figures 4, 6 et 8 sont des diagrammes représentant des comportements diélectriques de condensateurs selon l'invention en fonction de la température.

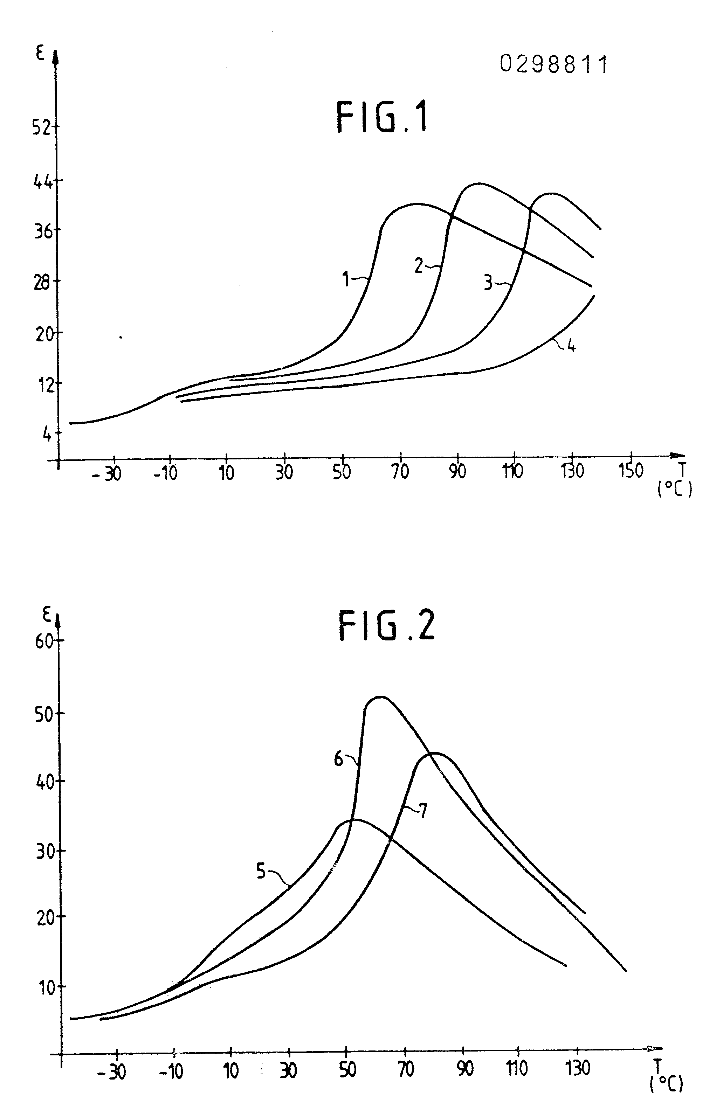

La figure 1 est un diagramme représentant la permittivité ε de copolymères de fluorure de vinylidène et de trifluoréthylène p(VF$_2$ - C$_2$ F$_3$ H) en fonction de la température T exprimée en degrés Celsius. Les courbes obtenues ont été relevées pour une fréquence de 1 kHz. Les quatre courbes correspondent à des compositions molaires différentes : la courbe 1 pour 50% de VF$_2$ et 50% de C$_2$ F$_3$ H, la courbe 2 pour 60% de VF$_2$ et 40% de C$_2$ F$_3$ H, la courbe 3 pour 70% de VF$_2$ et 30% de C$_2$ F$_3$ H et la courbe 4 pour 80% de VF$_2$ et 20% de C$_2$ F$_3$ H. Ces copolymères ont des températures de Curie égale ou supérieures à 70°C. Elles correspondent au maximum de permittivité.

La figure 2 est un diagramme représentant la permittivité de terpolymères de fluorure de vinylidène en fonction de la température T exprimée en degrés Celsius. Les courbes obtenues ont été relevées pour une fréquence de 1 kHz. La courbe 5 est relative à un terpolymère comprenant les proportions molaires suivantes : 55% de VF$_2$, 35% de C$_2$ F$_3$ H et 10% de C$_2$ F$_3$ Cl. La courbe 6 est relative à un terpolymère comprenant les proportions molaires suivantes : 60% de VF$_2$, 35% de C$_2$ F$_3$ H et 5% de C$_2$ F$_3$ Cl. La courbe 7 est relative à un terpolymère comprenant les proportions molaires suivantes : 60% de VF$_2$, 35% de C$_2$ F$_3$ H et 5% de C$_3$ F$_6$. Ces terpolymères ont des températures de Curie égale ou supérieures à 50°C.

Comme on peut le constater d'après les figures 1 et 2, la permittivité $\varepsilon$ varie d'une manière relativement rapide avec la température. Le tableau 1 donne les plages de température pour lesquelles les valeurs de permittivité sont comprises entre la valeur maximale et 0,9 fois cette valeur maximale. Les chiffres 1 à 7 renvoient aux courbes correspondantes sur les figures 1 et 2.

| courbe | 1 | 2 | 3 | 4 | 5 | 6 | 7 |
|--------|------|------|------|---|------|------|------|
| plage | 40° | 25° | 20° | – | 23° | 18° | 17° |

La courbe 4 n'est pas exploitable. La courbe 1 présente une plage relativement large mais a l'inconvénient de décroître très rapidement à partir du maximum lorsque la température diminue, c'est-à-dire vers les températures de fonctionnement habituelles.

Selon l'invention, les différents polymères utilisés ne sont pas intimement mêlés mais constituent des couches distinctes parallèles aux électrodes. Ainsi, ils ne peuvent se réarranger au cours des cyclages thermiques en modifiant les caractéristiques diélectriques du système. L'invention permet, selon le choix de l'empilement des différentes couches diélectriques et des électrodes, de prévoir le comportement du système à l'aide de schémas simples de condensateurs élémentaires en série et en parallèle.

Cette invention permet, par le choix des diélectriques, de leurs épaisseurs respectives et de la façon de les associer, de façonner le comportement en température d'un élément capacitif. Elle permet en particulier de stabiliser la valeur de la capacité dans une gamme de températures donnée tout en profitant des fortes valeurs de permittivités dues à la transition ferroélectrique de ces matériaux. Elle permet également de fabriquer des condensateurs ayant une variation thermique spécifique pour une application particulière (capteurs, etc...).

Cette invention est de plus compatible avec la technologie de réalisation des condensateurs multicouches qui est la mise en parallèle d'un grand nombre de petits teurs élémentaires. Les couches élémentaires peuvent ainsi être constituées alternativement de monocouches des différents polymères dont on veut moyenner les propriétés, ou de multicouches de ces différents polymères.

Les films diélectriques utilisés peuvent être des films minces autosupportés ou bien peuvent être enduits sur des armatures ou des films-supports à partir de solutions. Les multicouches peuvent être réalisées par empilement ou laquages successifs. Les couches élémentaires sont ensuite bobinées ou empilées selon les techniques usuelles. Les connexions sont assurées par la métallisation des films, l'insertion d'armatures conductrices ou tout autre moyen permettant de connecter les couches élémentaires en parallèle.

L'empilement des couches diélectriques et/ou conductrices peut également être réalisé par des techniques de dépôt localisé comme l'évaporation ou encore la sérigraphie.

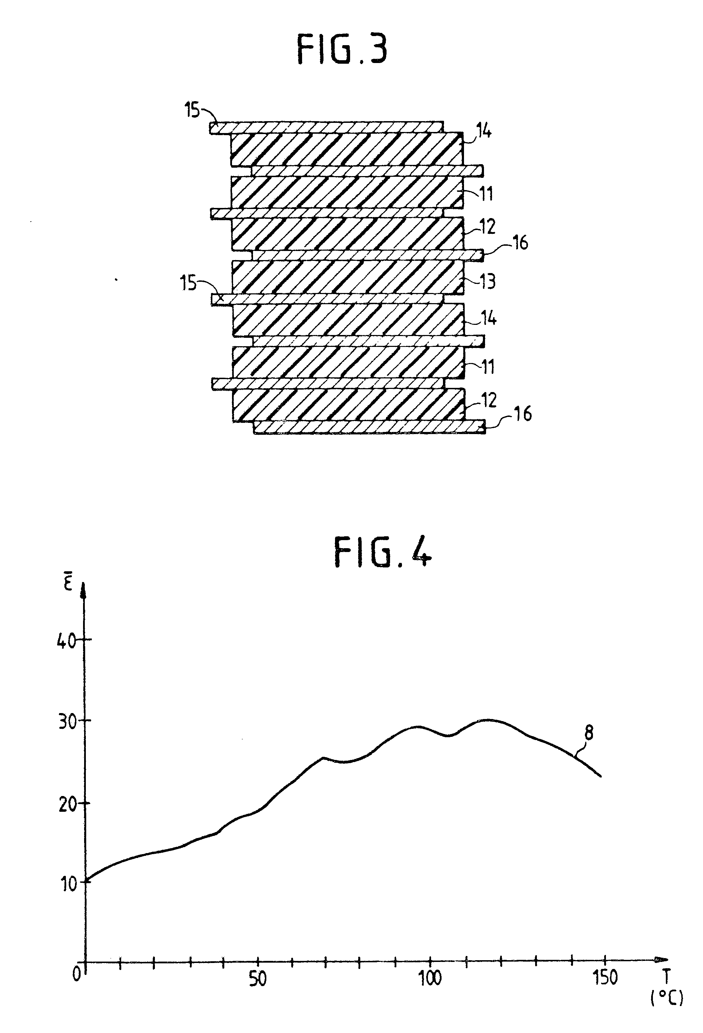

La figure 3 illustre un premier exemple d'application de l'invention. On a représenté sommairement l'empilement d'un condensateur constitué de couches diélectriques référencées 11 à 14, les couches étant séparées l'une de l'autre par des armatures impaires 15 et paires 16. Les armatures impaires 15 débordent d'un même côté de l'empilement tandis que les armatures paires 16 débordent de l'autre côté de l'empilement. Les armatures seront ensuite réunies, les impaires entre elles et les paires entre elles, par des terminaisons conductrices selon les méthodes de l'art connu. Tous les condensateurs élémentaires seront donc réunis en parallèle.

Dans cet exemple, on a employé comme diélectrique quatre polymères différents. Les différents polymères interviennent en nombre égal. Les couches 11 sont en copolymère $p(VF_2\text{-}C_2\,F_3\,H)$ avec pour proportions molaires 70% de $VF_2$ et 30% de $C_2\,F_3\,H$. Les couches 12 sont du même copolymère mais de proportions molaires 60% de $VF_2$ pour 40% de $C_2\,F_3\,H$. Les couches 13 sont également du même copolymère mais de proportions molaires 50% de $VF_2$ pour 50% de $C_2\,F_3\,H$. Les couches 14 sont en terpolymère $p(VF_2\text{-}C_2\,F_3\,H\text{-}C_2\,F_3\,Cl)$ avec pour proportions molaires 55% de $VF_2$, 35% de $C_2\,F_3\,H$ et 10% de $C_2\,F_3\,Cl$. Chaque couche élémentaire 11, 12, 13 ou 14 a la même épaisseur, par exemple de l'ordre de $1\mu$ pour un film laqué ou de l'ordre de $10\mu$ pour un film autosupporté. Le comportement diélectrique de ce système est représenté à la figure 4. La grandeur portée en ordonnées représente la constante diélectrique moyenne $\bar{\varepsilon}$ de la couche élémentaire pour ce système. Cette grandeur a été déduite de la mesure de la capacité du condensateur ainsi constitué et de ses caractéristiques dimensionnelles. La courbe 8 représente l'évolution de $\bar{\varepsilon}$ en fonction de la température T exprimée en degrés Celsius. Théoriquement, la permittivité moyenne $\bar{\varepsilon}$ de la couche élémentaire pour ce système est le quart de la somme des permittivités des couches 11, 12, 13 et 14.

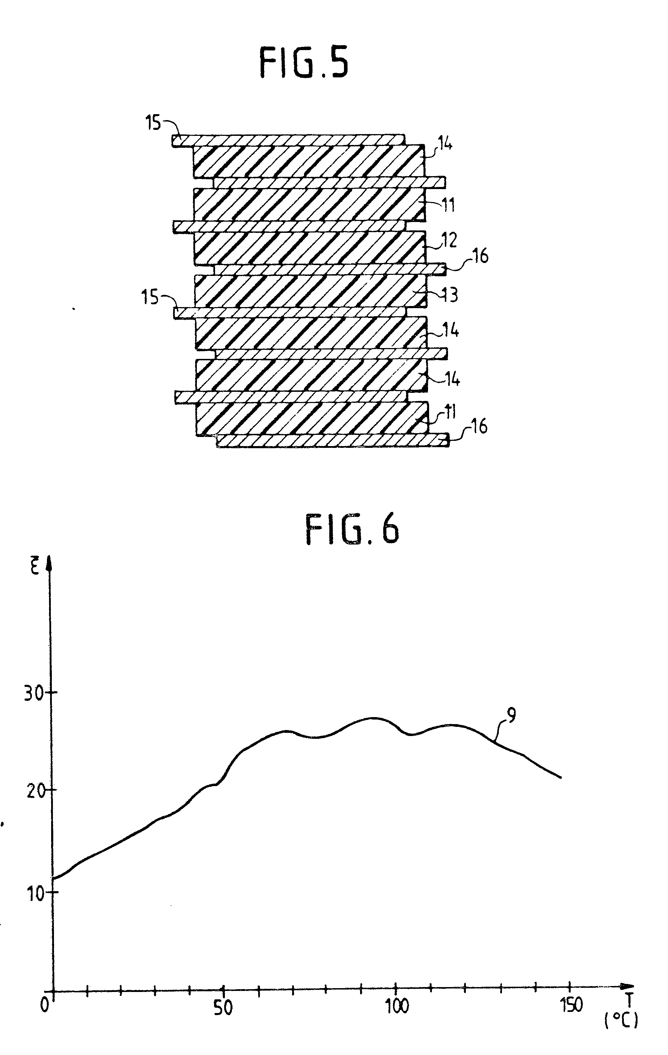

Pour améliorer le comportement diélectrique, on peut augmenter la contribution d'un des matériaux en le faisant intervenir plus souvent dans l'empilement ou en diminuant son épaisseur. La figure 5 reprend un empilement du type de la figure 3 mais pour lequel la couche 14 (terpolymère) intervient deux fois plus souvent que les autres couches 11, 12 et 13. Toutes les couches possèdent la même épaisseur. Le comportement diélectrique de ce système est représenté à la figure 6. La couche 9 représente l'évolution de $\bar{\varepsilon}$ en fonction de

0 298 811

la température T exprimée en degrés Celsius. On remarque immédiatement que cette courbe présente une plage de température pour laquelle la permittivité $\bar{\varepsilon}$ est maximale et varie très peu, qui est plus grande que celle de la courbe 8 (figure 4). Ceci est dû à la contribution plus importante du terpolymère dont le comportement diélectrique en fonction de la température est représenté par la courbe 5 sur la figure 2. Théoriquement, la permittivité moyenne $\bar{\varepsilon}$ de la couche élémentaire pour ce système est le cinquième de la somme des permittivités des couches 11, 12, 13 et 14, la couche 14 intervenant deux fois.

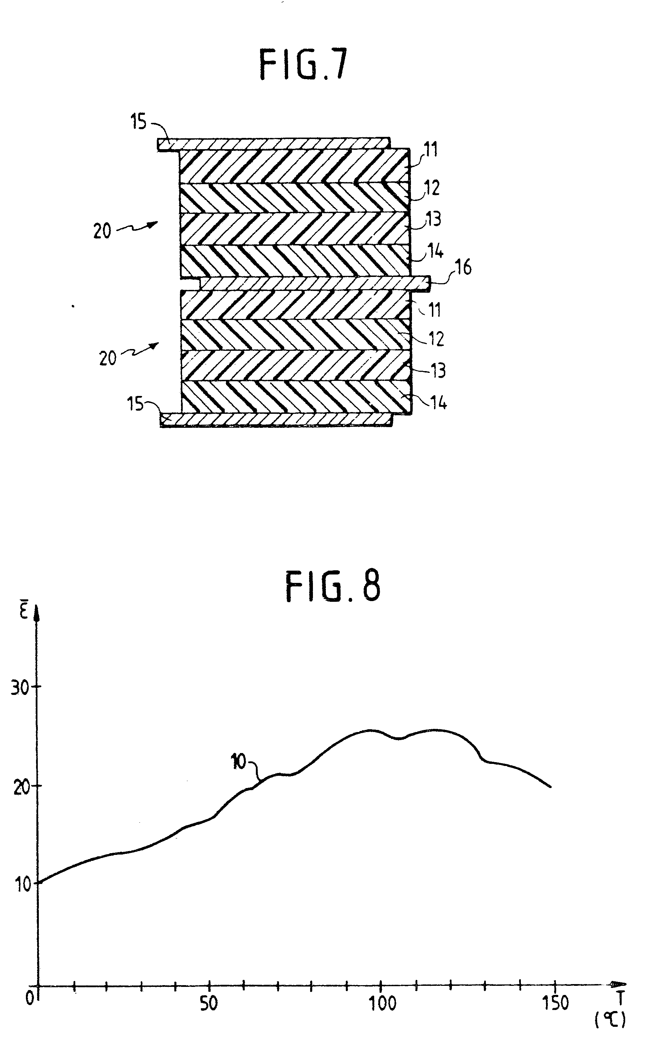

D'autres configurations sont également possibles comme des associations série-parallèle. La figure 7 représente un système où les condensateurs élémentaires sont d'abord montés en série pour former des condensateurs intermédiaires 20. Ces condensateurs intermédiaires 20 seront ensuite réunis en parallèle en reliant les armatures impaires 15 entre elles et les armatures paires 16 entre elles. Théoriquement, l'inverse de la permittivité moyenne $\bar{\varepsilon}$ de la couche élémentaire pour ce système est la somme des inverses des permittivités des couches 11, 12, 13 et 14. Le comportement diélectrique de ce système est représenté à la figure 8. La courbe 10 représente l'évolution de $\bar{\varepsilon}$ en fonction de la température T exprimée en degrés Celsius.

Le tableau 2 donne les plages de température pour lesquelles les valeurs de permittivité moyenne sont comprises entre la valeur maximale et 0,9 fois cette valeur maximale. Les chiffres 8 à 10 renvoient aux courbes correspondantes sur les figures 4, 6 et 8.

| courbe | 8 | 9 | 10 |
|--------|------|------|------|
| plage | 50° | 72° | 50° |

Tableau 2

En comparant les tableaux 1 et 2, on constate une nette amélioration de la largeur de plage pour les dispositifs selon l'invention par rapport à ceux de l'art connu.

Il entre dans le cadre de la présente invention de réaliser des condensateurs à partir de n'importe quelle association de couches élémentaires en série ou en parallèle afin d'augmenter la plage de stabilité en température, à partir de polymères ferroélectriques à températures de Curie différentes. D'autres polymères que ceux cités plus haut peuvent bien sûr être utilisés dans le cadre de l'invention, par exemple des homopolymères.

**Revendications**

1. Condensateur multicouche à base de films en polymère ferroélectrique, caractérisé en qu'il est formé à partir d'au moins deux films de polymères (11 à 14) dont les températures de Curie sont différentes.

2. Condensateur selon la revendication 1, caractérisé en ce que les polymères sont des copolymères et/ou des terpolymères à base de fluorure de vinylidène.

3. Condensateur selon la revendication 2, caractérisé en ce qu'il est constitué par la mise en parallèle de condensateurs élémentaires, chaque condensateur élémentaire comprenant un seul film de l'un des quatre polymères suivants : un premier copolymère (11) de fluorure de vinylidène et de trifluoroéthylène avec pour proportions molaires 70% de fluorure de vinylidène et 30% de trifluoroéthylène, un second copolymère (12) de fluorure de vinylidène et de trifluoroéthylène avec pour proportions molaires 60% de fluorure de vinylidène et 40% de trifluoroéthylène, un troisième copolymère (13) de fluorure de vinylidène et de trifluoroéthylène avec pour proportions molaires 50% de fluorure de vinylidène et 50% de trifluoréthylène, un terpolymère (14) de fluorure de vinylidène, de trifluoroéthylène et de trifluorochloroéthylène avec pour proportions molaires 55% de fluorure de vinylidène, 35% de trifluoroéthylène et 10% de trifluorochloroéthylène.

4. Condensateur selon la revendication 3, caractérisé en ce que lesdits quatre polymères interviennent en nombre égal dans la constitution des condensateur élémentaires.

5. Condensateur selon la revendication 3, caractérisé en ce que les premier, second et troisième copolymère interviennent en nombre égal dans la constitution des condensateurs élémentaires tandis que le terpolymère intervient deux fois plus souvent.

6. Condensateur selon la revendication 2, caractérisé en ce qu'il est constitué par la mise en parallèle de condensateurs intermédiaires (20), chaque condensateur intermédiaire étant lui-même constitué par la mise en série de condensateurs élémentaires.

7. Condensateur selon la revendication 6, caractérisé en ce que la mise en série des condensateurs élémentaires est formée par la superposition des quatre polymères suivants : un premier copolymère (11) de fluorure de vinylidène et de trifluoroéthylène avec pour proportions molaires 70% de fluorure de

4

vinylidène et 30% de trifluoroéthylène, un second copolymère (12) de fluorure de vinylidène et de trifluoroéthylène avec pour proportions molaires 60% de fluorure de vinylidène et 40% de trifluoroéthylène, un troisième copolymère (13) de fluorure de vinylidène et de trifluoroéthylène avec pour proportions molaires 50% de fluorure de vinylidène et 50% de trifluoroéthylène, un terpolymère (14) de fluorure de vinylidène, de trifluoroéthylène et de trifluorochloroéthylène avec pour proportions molaires 55% de fluorure de vinylidène, 35% de trifluoroéthylène et 10% de trifluorochloroéthylène.

FIG.1

0298811

FIG.2

## FIG.3

## FIG.4

0298811

# FIG.5

# FIG.6

# FIG.7

# FIG.8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | BE-A- 484 306 (PHILIPS' GLOEILAMPENFABRIEKEN) <br> * Page 2, paragraphe 4 - page 5, paragraphe 2 * <br> --- | 1,2 | H 01 G 4/36 <br> H 01 G 4/20 |
| Y | EP-A-0 206 926 (THOMSON-CSF) <br> * Revendications * | 1,2 | |
| A | . <br> --- | 3,7 | |
| Y | US-A-3 210 607 (TEXAS INSTRUMENTS INC.) <br> * Revendications 16,17 * <br> --- | 1,2 | |
| A | FR-A-2 535 516 (L.C.C. - C.I.C.E. COMPAGNIE EUROPEENNE DE COMPOSANTS ELECTRONIQUES) <br> ----- | | |

**DOMAINES TECHNIQUES RECHERCHES (Int. Cl.4)**

H 01 G

Le présent rapport a été établi pour toutes les revendications

| Lieu de la recherche | Date d'achèvement de la recherche | Examinateur |
|---|---|---|
| LA HAYE | 11-10-1988 | SCHUERMANS N.F.G. |